# EUROPEAN PATENT SPECIFICATION

(11) **EP 1 010 917 B1**
(45) Date of publication and mention of the grant of the patent: **21.11.2001**
(21) Application number: 99123288.5
(22) Date of filing: 30.11.1999
(51) Int. Cl.: F16F 15/023

(54) **High energy damping device**
Hochleistungsdämpfer
Amortisseur à haute puissance

(30) Priority: 15.12.1998 US 211773
(43) Date of publication of application: 21.06.2000
(73) Proprietor: Air Loc Schrepfer AG, 8700 Küsnacht (CH)
(72) Inventor: Hasz, John R., Delta Junction, Ak 99737 (US)
(74) Representative: Hoffmann, Eckart, Dipl.-Ing.

(56) References cited:
- EP-A- 0 157 352
- DE-A- 2 248 439
- DE-A- 4 223 256
- GB-A- 726 791

## Description

The present invention relates to vibration damping devices or pads which utilize squeeze film technology to provide energy dissipation.

The configuration of prior art squeeze film damping pads as applied directly for vibration absorption in supporting machine tools is shown in Canadian Patent No. 1,236,812. The damping pad there disclosed employs as two mating damper elements a cylinder cup and piston arrangement in opposed position between the machine tool and a supporting surface for carrying the weight of the machine tool on support pins which serve as very stiff axial compression springs. The cylinder and piston damping elements are dimensioned such that when assembled, they define annular spaced walls which define a squeeze film gap with provisions made to fill the gap with a viscous oil. With this arrangement, the vibrating load which is supported by the support pins applies horizontal vibration displacement by virtue of the support pins being located in oversized holes permitting the pins to deflect slightly and accommodate the squeeze film action in the oil between the walls of the squeeze film gap. As noted in the Canadian patent, the squeeze film gap need not be annular to accommodate mating structures which are not necessarily circular.

As stated in the Canadian patent, the support pins arranged for carrying the load in their axial direction are relatively flexible in a lateral direction and mounted within the confines of clearance holes to permit translation of a small amount of horizontal deflection under the influence of machine vibrations. It is very costly to manufacture the support pins and their respective bored holes accurately enough so that all the pins share the load equally. Specific problems are encountered with different pin lengths and improper hole alignment between the top and bottom members. Misalignment is also a problem when the bolts were used instead of the pins. It is difficult to properly adjust the torque on the bolts so they are all carrying the same load. This is important so the squeeze film annular spacing is uniform throughout the entire circumference of the piston. Furthermore, it is very difficult to maintain squareness between the plane formed by the pin and bolt lengths with the annular squeeze surfaces. This difficulty greatly reduces the effective damping available from the damping device. In some cases actual mechanical binding can occur.

It is an object of the invention to overcome the problems of the prior art and to provide an improved damping device ensuring a precise spacing between the two mating damper elements.

This object is achieved with a damping device as claimed in claim 1. Preferred embodiments are subject-matter of the dependent claims.

The present invention provides various forms of squeeze film damping structures with precision spacing between the mating damper elements on which the machine tool, for example, is mounted which maintains the elevation support level of the machine tool while providing a limited degree of freedom between the two damper elements normal to the direction of the load. The horizontal deflection due to vibration provides for complimentary compression and expansion of the squeeze film gap defined between the damper elements as vibrations are transmitted to the device. These features of the present invention are achieved by providing retaining recesses in the opposed horizontal surfaces of the piston and cylinder damper elements which accommodate rolling load bearing elements, such as high tensile steel balls or cylindrical rollers. The load bearing elements are dimensioned to provide the appropriate gap between the horizontal surfaces of the damper elements and thus provide a high tensile element for load support which is capable of maintaining the designated support level for the machine tool or other load supported by means of the damping device. To accommodate squeeze film action, the load bearing elements are free to roll a limited distance within the recesses in which they are contained in a direction substantially perpendicular to the squeeze film gap, thus transmitting lateral deflection to the squeeze film chamber which is uniform throughout the height of the squeeze film chamber.

The steel balls avoid introduction of any tilting or other misalignment of the load vector supported by the damping device. The steel balls are far less expensive that either the pins or the bolts mentioned above and eliminate the load carrying problem as well as any misalignment problems.

The balls and the ball track are self centering. The greater the load on the damping device, the greater is the centering action, which serves to eliminate any misalignment. The prior art according to the Canadian patent does not have this centering advantage. It relies on mechanical alignment for the original alignment but transverse loads can make the damping device inoperable by deflecting the position off center. The invention, with its self centering capability, greatly reduces this potential problem. Furthermore, the relationship between load and centering is very important in order to maintain the proper damping generated by the squeeze film action. The balls and the track maintain this relationship and keep the piston centered.

The steel balls and their respective race produce a very rigid interface in the load bearing direction. In many machine structures it is very important to support the machine vertically with a very rigid support mechanism. This is accomplished with the steel balls much more effectively than with the pins or bolts.

Therefore, the invention allows to support a machine more rigidly to maintain alignment better than the Canadian patent and will, at the same time, yield the same or better damping.

The use of the rollers makes the damping device directional. It can constrain a machine structure in such a way as to maximize the damping while eliminating any lateral movement in other directions. The self centering concept is maintained as well as all the other advantages mentioned above.

The invention will be explained in more detail below with reference to preferred embodiments and in conjunction with the accompanying drawings, in which:
- FIG. 1: is a sectional view through the center line of a circular configured double squeeze film chamber damping pad, made in accordance with a first embodiment of the invention;
- FIG. 2: is a top plan view of the damping device shown in FIG. 1;
- FIG. 3: is a partial view in section illustrating an elliptical track for a high tensile ball;
- FIG. 4: is a sectional view similar to FIG. 1 of a single squeeze film chamber damping pad made in accordance with a second embodiment of the invention;
- FIG. 5: is a sectional view of a simplified single squeeze film chamber damping pad having modified retaining recesses for the ball bearing assembly which increases squeeze film working area and improves distribution of the viscous fluid;
- FIG. 6: is a sectional view of a roller supported double squeeze film chamber damping pad useful for supporting loads with unidirectional vibration displacement; and
- FIG. 7: is a top plan view of the damping pad shown in FIG. 6.

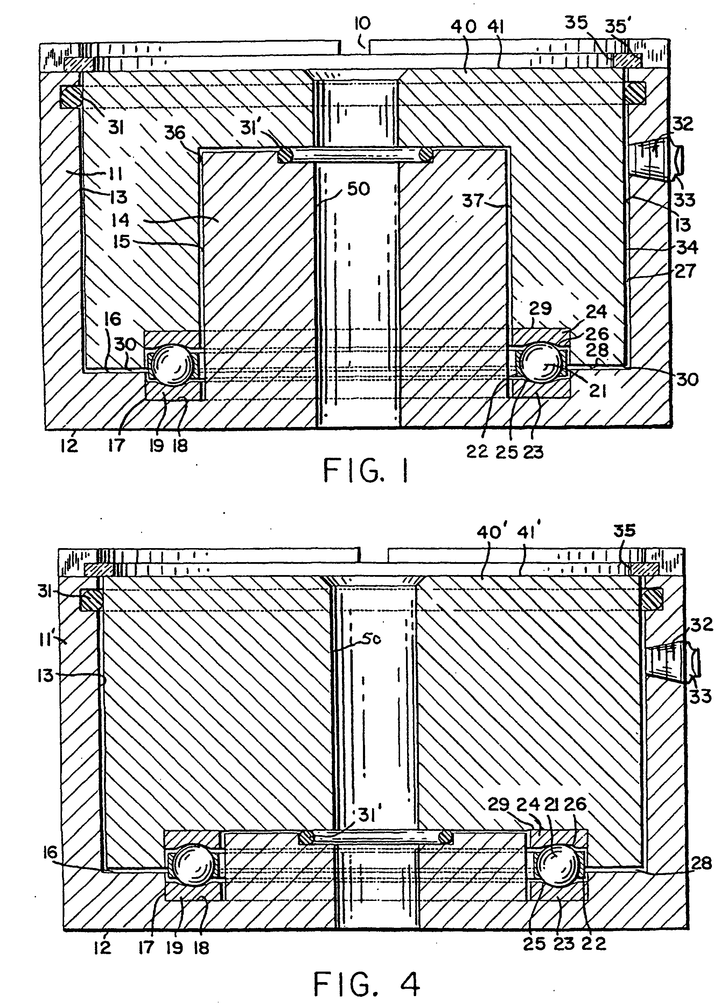

FIG. 1 shows a squeeze film damping pad constructed in accordance with a first embodiment of the invention which employs an outer cup shaped element 11, having a flat lower support surface 12 for supporting the damping pad and the load that it is carrying. Element 11 has a inner cylindrical wall 13 which provides the outer wall of a first squeeze film chamber. Extending axially upward from the bottom of cup-shaped element 11 is a piston 14 having an outer cylindrical wall 15 which provides the inner wall of a second squeeze film chamber.

Element 11 has lower horizontal inner surface 16 recessed at 17 to provide a lower bearing surface 18 which supports elements of an annular ball bearing assembly 19.

The ball bearing assembly 19 provides a plurality of high tensile spherical balls 21 equidistantly spaced around a circumference by a cage 22 to run in a lower race 23 and an upper race 24. The lower and upper races 23, 24 are grooved at 25, 26. Each of these grooves may be a ring groove of circular arc shape in cross section with a slightly larger radius than the radius of balls 21. This construction provides for a very small rolling displacement in the radial direction corresponding to the squeeze film action. The diameter of the balls is chosen to provide a working clearance space 30 between the horizontal opposed surfaces 16 and 28 of elements 11 and 40 which maintains the elevation level of the supported load and permits damping fluid flow throughout the damping pad.

The upper extremity of element 11 has a further recess 35' to receive a spring clip retaining ring 35, to hold the unloaded assembly together; four spaced slots 10 provide drainage.

An upper or inner element of the damping pad is in the form of a mating cup shaped element 40 having an outer cylindrical surface 34 dimensioned to provide opposed to the inner cylindrical wall 13 of element 11 an outer squeeze film gap 27. An inner squeeze film gap 36 is defined between the outer cylindrical wall 15 of piston 14 and an the inner surface 37 of element 40.

The upper extremity of the element 11 is recessed for an O-ring 31 which seals the outer squeeze film gap 27 defining the first squeeze film chamber for retaining the squeeze film liquid which may be applied through a threaded port 32 closed by a threaded plug 33. A second O-ring 31' seals the inner squeeze film gap 36 providing the second squeeze film chamber.

Opposed to the surface 16 of element 11, the lower horizontal surface 28 of element 40 is recessed at 29 to accept the upper bearing race 24.

The upper horizontal surface 41 of element 40 receives the load of the machine supported by the damping pad and transmits the load through the high tensile balls of the ball bearing assembly 19 to the horizontal support surface 12 of element 11.

The high tensile balls of the ball bearing assembly 19 are free to roll horizontally or radially to a limited extent in response to a transverse vibration motion from the supported machine tool or the like supported on surface 41. This translational motion permits squeeze film damping action along the entire vertical surfaces that form squeeze film gaps 27 and 36 while at the same time supporting the load at a uniform vertical height by virtue of carrying the force of the load uniformly through the high tensile balls 21 to the support surface 12.

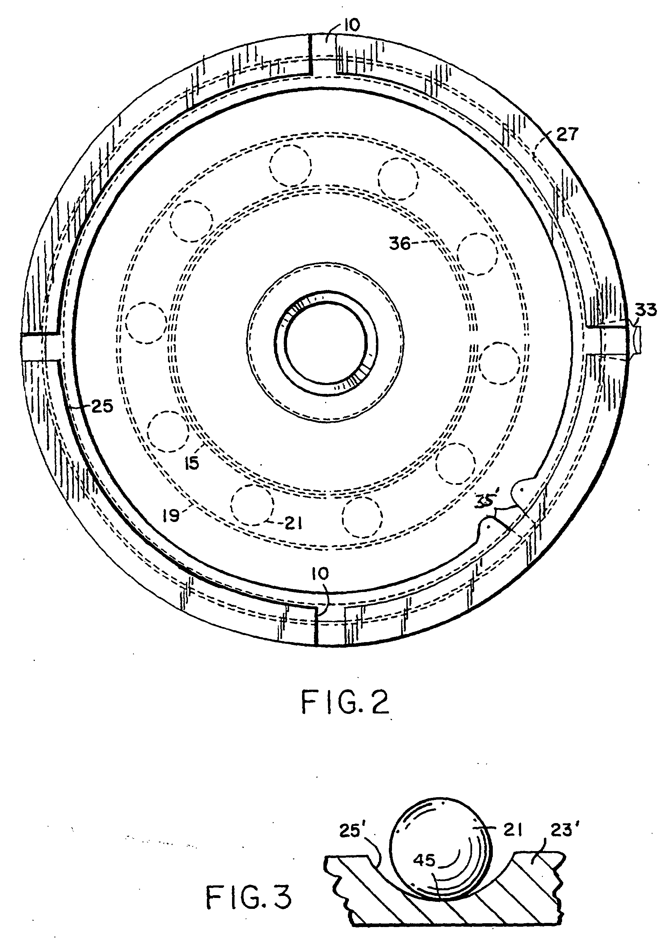

Referring to FIG. 2, the elements described with respect to FIG. 1 can be identified as including the ball bearing assembly 19 which maintains the high tensile balls 21 in equidistant spaced relation, the slots 10, and the spring clip retaining ring 35. The inner squeeze film gap 36 and the outer squeeze film gap 27 when filled with oil or other squeeze film fluid position elements 11 and 40 to be substantially coaxial.

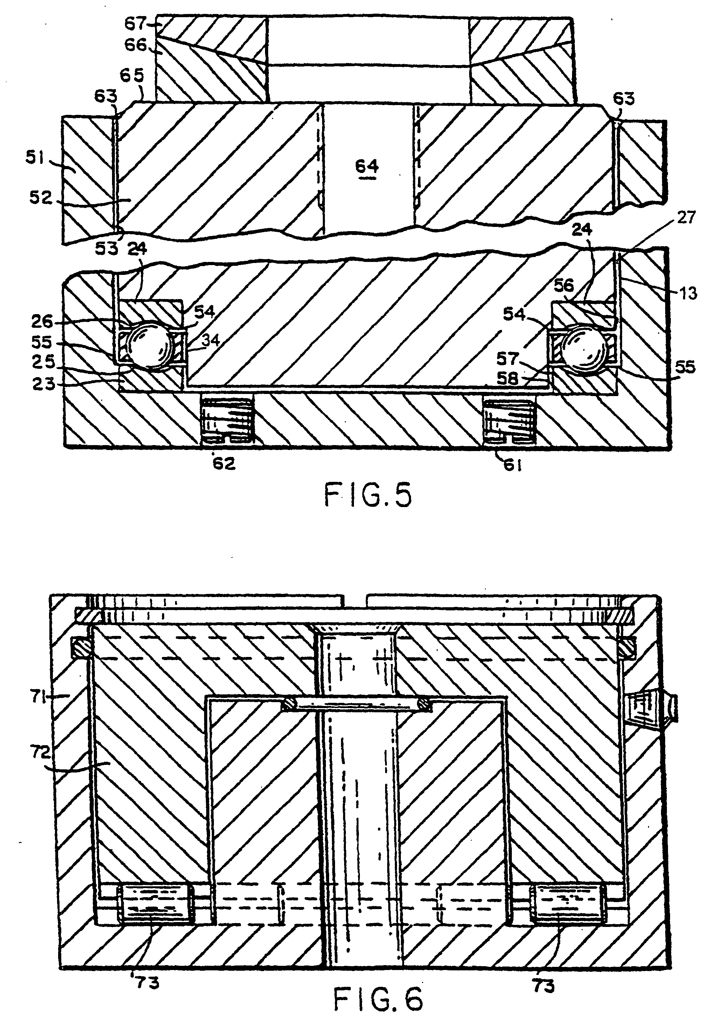

Referring to FIG. 3 a partial showing of a modification of the high tensile ball and race which provides for limited rolling horizontal (radial) action is shown. FIG. 1 was described as having the high tensile balls roll in a groove of the bearing race which has a circular or circular arc shape in cross section of a somewhat larger radius than the radius of the high tensile balls to permit transverse or horizontal limited motion. FIG. 3 shows a modification in which the sectional shape of the groove for the balls is a portion of an ellipse. Thus, a bearing race 23' has therein a groove 25' that extends beyond the high tensile ball 21. The surface of groove 25' in FIG. 3 is developed as a portion of an ellipse in cross section with the elliptical surface having its minor axis centered at the base of the ball at 45. By using an appropriate elliptical surface the high tensile ball 21, when at rest, is making point contact at the minor axis 45 of the ellipse as when the grove is circular such that its initial incremental motion will be on a flat surface and not subject to elevation resistance. Of course, displacement of the ball 21 in the groove 25' immediately alters this condition so that the ball is meeting with elevation resistance to retain it within the groove as the squeeze film vibration action takes place. This arrangement thus offers the advantage of small incremental translational motion that is not affected by, in effect, lifting the load as the ball reaches the portion of the groove where its rolling motion has a vertical component

Referring to FIG. 4, a single squeeze film chamber damping pad is shown which, in almost all respects, is similar to the outer damping chamber construction of FIG. 1. The changes involve an element 40' analogous to element 40 in FIG. 1, except that it is not cup shaped, but is rather a solid block that fits within the cavity of a cup shaped element 11', (which in this instance is not formed with a centrally projecting piston 14). As in FIG. 1, the inner element 40' of FIG. 4 is recessed at the bottom to receive a ball bearing assembly 19, which is also retained in a recess 17 in the surface 16.

The single squeeze film gap disclosed in FIG. 4, in all respects, is formed and operates like the outer squeeze film gap in FIG. 1 and is achieved by eliminating the upwardly projecting piston 14 of FIG. 1 and instead substituting a solid block element 40' which is machined in just the way element 40 was in FIG. 1 at the bottom to receive the ball bearing assembly 19. The inner element 40' has a load bearing upper surface 41' and in each of the damping pads in FIG. 1 and FIG. 4, an axial bolt hole 50 provides for use of bolts or other fastening means to secure the damping pad when mounted for supported machinery.

Referring to FIG. 5, a modified damping pad is shown of simplified construction in accordance with the invention. It is shown constructed as a single squeeze film chamber cup and piston unit modified, however, by construction which permits utilizing the ball bearing assembly held in the recesses formed in the inner and outer damper elements as part of the squeeze film area. Thus, in FIG. 5 a cup shaped outer element 51 is dimensioned to receive a generally cylindrical piston shaped inner element 52 dimensioned to provide, when centered in the cavity of element 51 the parallel walls which form a circular squeeze film gap 53 defining the single squeeze film chamber.

In FIG. 5 a ball bearing assembly 19 of the type described in FIG. 1 has lower and upper races 23 and 24 with especially enlarged grooves 25 and 26, as previously described.

The difference in action of the FIG. 5 embodiment derives essentially from a manner in which the bearing assembly 19 is recessed into the retaining spaces in the outer element 51 and inner element 52. Referring to the right end portion of the bearing shown in FIG. 5 the subtle difference in mounting the bearing assembly and the effect of the change will be described.

As previously described, elements 51 and 52 are dimensioned to provide a squeeze film gap 53 between their inner and outer surfaces, respectively. This relationship holds true to and including the end face 56 of the upper race 24 which is opposed to the inner wall of outer element 51. This condition is achieved by forming the recesses to receive the bearing assembly in the inner element 52 at the periphery which forms the outer surface and, hence, end face 56 is part of the squeeze film gap walls. To achieve this construction, the recess in the lower corner of inner element 52 is rectangular to receive upper race 24 and reaches to the peripheral wall of the squeeze film gap. The upper race 24 is so positioned by virtue of a projecting shoulder 54 at the inner end of the recess which projects the race 24 in line with the inner surface of the squeeze film gap. In complimentary fashion, the recess for the lower race 23 is formed solely by a shoulder 55 projecting from the inner wall of the outer element 51. The width of the projecting shoulders 54 and 55 is the same as that of the squeeze film gap 53, which positions the outer face of race 24 in gap forming relation to the inner wall of element 51, the outer face of race 24 being designated 56. Similarly, the face 57 of lower race 23 forms a gap relation to the recess face 58 of element 52. Since the respective ends of races 23 and 24 are now positioned to continue the vibration absorbing gap whether positioned relative to the inner surface of element 51 or the outer surface (recessed) of element 52, the presence of the ball bearing assembly does not significantly reduce the area of active squeeze film gap.

Several other features are shown in FIG. 5. Two screw plugs 61 and 62 may be provided for filling the squeeze film gap and exhausting air when squeeze film liquid is applied to fill the gap. Another feature is the elimination of the O-rings with the upper end of the squeeze film gap being sealed by elastomer material 63. Screw plugs 61 and 62 can be eliminated by filling the gap with oil from the top before sealing with elastomer 63.

Another feature is the threaded bore hole 64, capable of receiving mating threaded bolts for securing the machine tool through the upper surface 65 to provide the load supporting contact with the inner element 52. As indicated in FIG. 5, known self leveling intermediate contact elements 66, 67, or other expedients may be used to properly position the load on the damping pad.

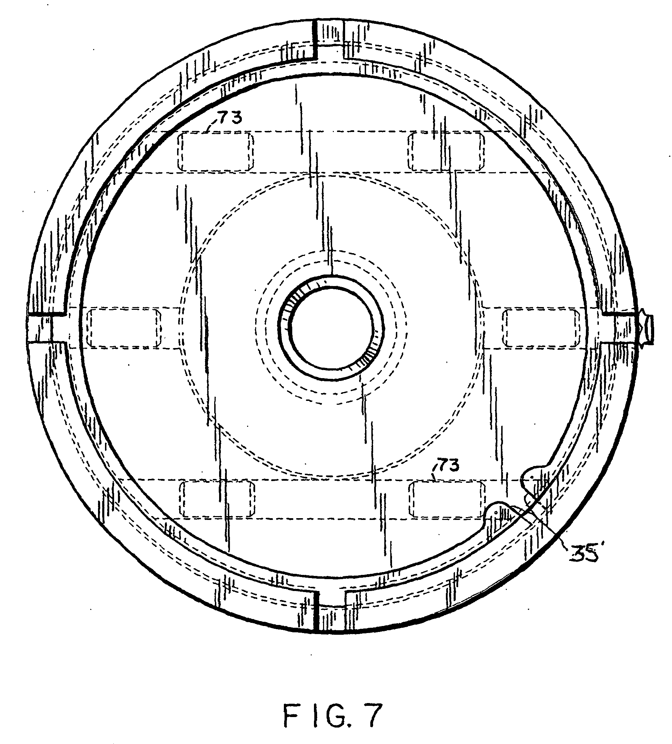

Another modification of the invention utilizing the principles disclosed can be formed for vibration absorption which is translational in a single direction. In FIG. 6, the general arrangement of the cup and piston elements, respectively, are shown similar to FIG. 1. The cup element 71 has a bottom wall that is adapted to receive high tensile roller bearing cylindrical rollers 73, which, as shown in FIG. 7, are constrained by grooves to roll in a single direction. The rollers 73 are distributed for uniform weight bearing as shown in circular plan view in FIG. 7. The squeeze film action is between the inner wall of cup element 71 and the outer wall of cylindrical piston element 72. Since the vibratory motion would be confined in the direction of rolling of the rollers 73 (which is shown vertical in Fig. 7), the effective squeeze film action would occur primarily at the top and bottom positions (12 o'clock and 6 o'clock positions) of the annular squeeze film gap shown in FIG. 7 with squeeze film activity along the annular squeeze film gap diminishing approximately according to the cosine of the angle counted in clockwise or counterclockwise direction from the 12 o'clock position as the 0° position.

Other arrangements of the invention will occur to the skilled in the art from the embodiments described herein. Such arrangements which employ load transmission through rolling bearings, which accommodate transverse displacement against squeeze film cavities for incremental displacements will generally involve the invention as defined in the appended claims.

## Claims

1. A vibration damping device adapted to be interposed between a load mass and a support surface for said mass comprising:
cooperatively-formed first and second damper elements (11, 40; 11', 40'; 51, 52; 71, 72), one within the other, to form a substantially vertical squeeze film clearance gap (27, 36) between said damper elements, said gap defining a damping chamber, said damper elements having opposed horizontal surfaces (16, 28) with matched recesses (25, 26; 25') for retaining load bearing members (21; 73) therebetween;
a plurality of said load bearing members (21; 73) retained by said recesses (25, 26; 25') and dimensioned to provide a working separation (30) between said opposed horizontal surfaces (16, 28) while load bearing, said recesses (25, 26; 25') being dimensioned to permit limited motion of said load bearing members (21; 73) normal to said gap (27); and
means (32, 33; 61, 62) for providing a viscous damping medium filling said gap (27)
**characterized in that**
said load bearing members (21; 73) have a cylindrical or spherical shape and are arranged such that their limited motion is a rolling motion.

2. The damping device according to claim 1 in which a viscoelastic damping medium fills said clearance gap (27, 36).

3. The damping device according to claim 2 including sealing means (31, 31'; 63) closing said clearance gap (27,36) with substantial compliance in the direction in which said load bearing members (21; 73) are permitted to move.

4. The damping device according to any one of claims 1 to 3 in which said load bearing members (21) are high tensile balls having a diameter to establish said working separation; and
said recesses (25, 26; 25') are dimensioned wider than said diameter to permit said balls to roll as said clearance gap (27, 36) changes normal to the direction of the load.

5. The damping device according to any one of claims 1 to 3 in which said load bearing members (73) are high tensile cylindrical rollers having a diameter to establish said working separation; and
said recesses are dimensioned to permit limited unidirectional rolling motion of said cylinders normal to said gap (27).

6. The damping device according to claim 4, wherein:
said first and second damper elements (11, 40; 11', 40'; 51, 52) are formed as a circular cylinder (11; 11'; 51) and a mating piston (40; 40'; 52) dimensioned to fit one into the other with an annular squeeze-film clearance gap (27, 36) between said cylinder and piston;
a ball bearing assembly of said high tensile balls (21) positioned around said piston (40; 40'; 52) to provide said working separation axially between said cylinder and piston and bear through said balls (21) an axial load applied to said cylinder and piston while permitting limited rolling motion of said balls to provide for transverse motion between said cylinder and piston altering the width of said annular gap (27, 36); and
means (31, 32, 33; 61, 62, 63) for filling and retaining a damping fluid medium in said annular gap.

7. The damping device according to claim 6, comprising:
said first and second damper elements formed as a pair of circularly symmetrical mating elements including
a) an outer cup-shaped element (11) having an inner cylindrical wall (13) and an axial cylindrical projection forming a first piston (14); and
b) an inner cup-shaped element (40) having an outer cylindrical surface (34) forming a second piston opposed to said inner cylindrical wall (13) and an inner surface (37) forming a cylindrical wall opposed to the surface of said first piston (14);
the dimensions of said elements (11, 40) being such that when assembled said elements provide two annular squeeze film gaps (27, 36) between the respective opposed cylindrical walls and pistons;
said ball bearing assembly being arranged in recesses (25, 26; 25') around said first piston (14) and retained between said elements (11, 40), the diameter of said balls providing said axial working separation between the opposed end-faces of said pistons and cylinders; and
means for filling and retaining a damping fluid medium in said annular squeeze-film chambers and said axial spacing.

8. The damping device according to claim 4, comprising
said first and second damper elements formed as a pair of circularly symmetrical mating elements including
a) an outer cup shaped element (11; 11'; 51) having an inner cylindrical wall (13); and
b) an inner cylindrical piston (40; 40'; 52) having an outer cylindrical surface (34);
the dimensions of said damper elements (11, 40; 11', 40'; 51, 52) being such that, when axially assembled, said inner cylindrical wall (13) and said outer cylindrical surface (34) form an annular squeeze film gap (27);
a circular ball bearing assembly of said high tensile balls (21) retained between said damper elements (11, 40; 11', 40'; 51, 52) with the diameter of said high tensile balls providing said working separation between said opposed horizontal surfaces formed by a lower horizontal surface (28) of said piston (40; 40'; 52) and the horizontal inner surface (16) of said cup shaped element (11; 11'; 51) thereby transmitting all vertical load forces applied to said damping device through said high tensile
balls (21);
said ball bearing assembly having upper and lower races (24, 23; 23') and said recesses (26, 25; 25') are annular race grooves larger than the diameter of said balls (21) to permit limited motion between said damper elements in radial directions.

9. The damping device according to claim 8 having a squeeze film liquid filling said annular gap (27) for absorbing transverse vibration forces.

10. The damping device according to claim 8 or 9 wherein
said inner cylindrical wall (13) terminates at the bottom of said cup shaped element (51) with a step shoulder (55) which reduces the inner diameter of said cup shaped element (51) to position the lower race (23) opposed to said cylindrical surface (43) by the thickness of said gap; and
said cylindrical surface (43) of said piston (52) is recessed to receive the top race (24) of said bearing assembly with a step shoulder (54) which positions said top race opposed to said inner cylindrical wall (13) spaced by the thickness of said annular gap (27).

## Patentansprüche

1. Vibrationsdämpfungsvorrichtung zum Zwischensetzen zwischen eine Lastmasse und eine Tragfläche für die Masse, umfassend:
kooperativ gebildete ein erstes und ein zweites Dämpferelement (11, 40; 11', 40'; 51, 52; 71, 72), die, eines in dem anderen, zusammenpassend ausgebildet sind zur Bildung eines im wesentlichen vertikalen Zwischenspalts (27, 36) zwischen den Dämpferelementen, wobei der Spalt eine Dämpfungskammer bildet und die Dämpferelemente einander gegenüberliegende horizontale Flächen (16, 28) mit zueinander passenden Ausnehmungen (25, 26; 25'), um dazwischen Lastlagerelemente zu halten, aufweisen;
mehrere der Lastlagerelemente (21; 73), die in den Ausnehmungen (25, 26; 25') gehalten und so bemessen sind, daß sie einen Arbeitsabstand (30) zwischen den gegenüberliegenden Horizontalflächen (16, 28) schaffen, während sie die Last lagern, wobei die Ausnehmungen (25, 26; 25') so bemessen sind, daß sie eine begrenzte Bewegung der Lastlagerelemente (21; 73) normal zum Spalt (27) erlauben; und
Mittel (32, 33; 61, 62) zur Lieferung eines viskosen Dämpfungsmediums, um den Spalt (27) zu füllen,
**dadurch gekennzeichnet, daß** die Lastlagerelemente (21; 73) eine zylindrische oder kugelförmige Form aufweisen und so angeordnet sind, daß ihre begrenzte Bewegung eine Rollbewegung ist.

2. Dämpfungsvorrichtung nach Anspruch 1, bei dem ein viskoselastisches Dämpfungsmediums den Zwischenspalt (27, 36) füllt.

3. Dämpfungsvorrichtung nach Anspruch 2 mit Dichtmitteln (31, 31'; 63), die den Zwischenspalt (27, 36) mit wesentlicher Nachgiebigkeit in der Richtung abschließen, in der sich die Lastlagerelemente (21; 73) bewegen können.

4. Dämpfungsvorrichtung nach einem der Ansprüche 1 bis 3, bei dem die Lastlagerelemente (21) hochzugfesten zylindrische Kugeln mit einem den Arbeitsabstand herbeiführenden Durchmesser sind; und
die Ausnehmungen (25, 26; 25') weiter bemessen sind als dieser Durchmesser, so daß die Kugeln rollen können, wenn sich der Zwischenspalt normal zur Richtung der Last ändert.

5. Dämpfungsvorrichtung nach einem der Ansprüche 1 bis 3, bei dem die Lastlagerelemente (21) hoch hochzugfesten zylindrische Rollen mit einem den Arbeitsabstand herbeiführenden Durchmesser sind; und
die Ausnehmungen so bemessen sind, daß sie eine begrenzte unidirektionale Rollbewegung der Zylinder normal zu dem Spalt (27) zulassen.

6. Dämpfungsvorrichtung nach Anspruch 4, bei der:
das erste und das zweite Dämpferelement (11, 40; 11', 40'; 51, 52) als kreisförmiger Zylinder (11; 11'; 51) und als dazu passender Kolben (40; 40'; 52) ausgebildet sind, die so bemessen sind, daß sie unter Bildung eines ringförmigen Quetschfilmzwischenspalts (27, 36) zwischen dem Zylinder und dem Kolben ineinander passen;
eine Kugellageranordnung aus den hochzugfesten Kugeln (21) um den Kolben (40; 40'; 52) herum angeordnet ist, um den Arbeitsabstand axial zwischen dem Zylinder und dem Kolben zu schaffen und über die Kugeln (21) eine auf den Zylinder und den Kolben ausgeübte axiale Last aufzunehmen, wobei eine begrenzte Rollbewegung der Kugeln zur Schaffung einer Querbewegung zwischen dem Zylinder und dem Kolben unter Änderung der Breite des ringförmigen Spalts (27, 36) ermöglicht wird; und
Mittel (31, 32, 33; 61, 62, 63) zum Füllen und Zurückhalten eines Dämpfungsfluidmediums in dem ringförmigen Spalt.

7. Dämpfungsvorrichtung nach Anspruch 6, umfassend:
das erste und das zweite Dämpferelement, ausgebildet als Paar kreisförmig symmetrischer zueinander passender Elemente, mit
(a) einem äußeren becherförmigen Element (11) mit einer zylindrischen Innenwand (13) und einem axialen zylindrischen Vorsprung, der einen ersten Kolben (14) bildet; und
(b) einem inneren becherförmigen Element (40) mit einer einen zweiten Kolben bildenden zylindrischen Außenfläche (34), die der zylindrischen Innenwand (13) gegenüberliegt, und einer Innenfläche (37), die eine zylindrische Wand bildet, die der Fläche des ersten Kolbens (14) gegenüberliegt;
wobei die Abmessungen der Elemente (11, 40) derart sind, daß sie im zusammengesetzten Zustand zwei ringförmige Quetschfilmspalte (27, 36) zwischen den jeweils gegenüberliegenden zylindrischen Wänden und Kolben bilden;
wobei die Kugellageranordnung in Ausnehmungen (25, 26; 25') um den ersten Kolben (14) angeordnet ist und zwischen den Elementen (11, 40) gehalten wird, wobei der Durchmesser der Kugeln den axialen Arbeitsabstand zwischen den gegenüberliegenden Stirnflächen der Kolben und Zylinder schafft; und
Mittel zum Füllen und Halten eines Dämpfungsfluidmediums in der ringförmigen Quetschfilmkammer und dem axialen Abstand.

8. Dämpfungsvorrichtung nach Anspruch 4, umfassend
das erste und das zweite Dämpferelement, ausgebildet als ein Paar kreisförmig symmetrisch zueinander passender Elemente, mit
(a) einem äußeren becherförmigen Element (11; 11'; 51) mit einer zylindrischen Innenwand (13); und
(b) einem inneren zylindrischen Kolben (40; 40'; 52) mit einer zylindrischen Außenfläche (34);
wobei die Abmessungen der Dämpferelemente (11, 40; 11', 40'; 51, 52) derart sind, daß, wenn sie axial zusammengefügt sind, die zylindrische Innenwand (13) und die zylindrische Außenfläche (34) einen ringförmigen Quetschfilmspalt (27) bilden;
eine kreisförmige Kugellageranordnung der hochzugfesten Kugeln (21), die zwischen den Dämpferelementen (11, 40; 11', 40'; 51, 52) gehalten wird, wobei die Durchmesser der hochzugfesten Kugeln den Arbeitsabstand zwischen den gegenüberliegenden Horizontalflächen bilden, die von einer unteren Horizontalfläche (28) des Kolbens (40; 40'; 52) und der horizontalen Innenfläche (16) des becherförmigen Elements (11; 11'; 51) gebildet werden, wodurch alle vertikalen Lastkräfte, die auf die Dämpfungsvorrichtung ausgeübt werden, über die hochzugfesten Kugeln (21) übertragen werden; wobei die Kugellageranordnung einen oberen und einen unteren Laufring (24, 23; 23') aufweist und die Ausnehmungen (26, 25; 25') ringförmige Laufringnuten sind, die größer sind als der Durchmesser der Kugeln (21), um eine begrenzte Bewegung zwischen den Dämpferelementen in radialen Richtungen zu erlauben.

9. Dämpfungsvorrichtung nach Anspruch 8 mit einer Quetschfilmflüssigkeit, die den ringförmigen Spalt (27) zum Absorbieren von Quervibrationskräften ausfüllt.

10. Dämpfungsvorrichtung nach Anspruch 8 oder 9, bei der
die zylindrische Innenwand (13) am Boden des becherförmigen Elements (51) mit einer Schulter (55) endet, die den Innendurchmesser des becherförmigen Elements (51) um die Dicke des Spalts verringert, um den unteren Laufring (23) gegenüber der zylindrischen Fläche (43) zu positionieren; und
die zylindrische Fläche (43) des Kolbens (52) ausgenommen ist, um den oberen Laufring (24) der Lageranordnung mit einer Stufenschulter (54) aufzunehmen, die den oberen Laufring gegenüber der zylindrischen Innenwand (13) beabstandet durch die Dicke des ringförmigen Spalts (27) positioniert.

## Revendications

1. Dispositif d'amortissement de vibrations conçu pour être interposé entre une masse de charge et une surface de support destinée à ladite masse, comprenant :
des premier et deuxième éléments d'amortissement formés de façon coopérante (11, 40; 11', 40'; 51, 52; 71, 72), l'un à l'intérieur de l'autre, pour former un espace intermédiaire de film de compression (27, 36) essentiellement vertical entre lesdits éléments d'amortisseur, ledit espace définissant une chambre d'amortissement, lesdits éléments d'amortisseur ayant des surfaces horizontales opposées (16, 28) avec des creux correspondants (25, 26; 25') pour retenir entre eux des éléments de palier de charge (21; 73);
une pluralité desdits éléments de palier de charge (21; 73) retenus par lesdits creux (25, 26; 25') et dimensionnés pour fournir une séparation fonctionnelle (30) entre lesdites surfaces horizontales opposées (16, 28) pendant le support d'une charge, lesdits creux (25, 26; 25') étant dimensionnés de façon à permettre un mouvement limité desdits éléments de palier de charge (21; 73) normalement audit espace (27); et
un moyen (32, 33; 61, 62) pour fournir un produit d'amortissement visqueux remplissant ledit espace (27)
**caractérisé en ce que**
lesdits éléments de palier de charge (21; 73) ont une forme cylindrique ou sphérique et sont disposés de telle façon que leur mouvement limité soit un mouvement de roulement.

2. Dispositif d'amortissement selon la revendication 1 laquelle un produit d'amortissement viscoélastique remplit ledit espace intermédiaire (27, 36).

3. Dispositif d'amortissement selon la revendication 2 comprenant un moyen d'étanchéité (31, 31'; 63) fermant ledit espace intermédiaire (27.36) avec une élasticité substantielle dans la direction dans laquelle il est permis auxdits éléments de palier de charge (21; 73) de se déplacer.

4. Dispositif d'amortissement selon l'une quelconque des revendications 1 à 3 dans lequel lesdits éléments de palier de charge (21) sont des billes à forte élasticité ayant un diamètre permettant d'établir ladite séparation fonctionnelle; et
lesdits creux (25, 26; 25') sont dimensionnés plus larges que ledit diamètre de façon à permettre auxdites billes de rouler lorsque ledit espace intermédiaire (27, 36) varie normalement à la direction de la charge.

5. Dispositif d'amortissement selon l'une quelconque des revendications 1 à 3 dans lesquels ledit éléments de palier de charge (73) sont des rouleaux cylindriques à forte élasticité ayant un diamètre permettant d'établir ladite séparation fonctionnelle; et
lesdits creux sont dimensionnés de facon à permettre un mouvement de roulement unidirectionnel limité desdits cylindres normalement audit espace (27).

6. Dispositif d'amortissement selon la revendication 4, dans lequel :
lesdits premier et deuxième éléments d'amortisseur (11, 40; 11', 40'; 51, 52) sont formés d'un cylindre circulaire (11; 11'; 51) et d'un piston correspondant (40; 40'; 52) dimensionnés de façon à s'ajuster l'un dans l'autre avec un espace intermédiaire annulaire de film de compression (27, 36) entre le lesdits cylindre et piston;
un assemblage de roulement à billes formé desdites billes à forte élasticité (21) est placé autour dudit piston (40; 40'; 52) pour fournir ladite séparation fonctionnelle axialement entre lesdits cylindre et piston et pour supporter par l'intermédiaire desdites billes (21) une charge axiale appliquée auxdits cylindre et piston tout en permettant un mouvement de roulement limité desdites billes pour permettre un mouvement transversal entre lesdits cylindre et piston modifiant la largeur dudit espace annulaire (27, 36); et
un moyen (31, 32, 33; 61, 62, 63) pour remplir et retenir un produit d'amortissement fluide dans ledit espace annulaire.

7. Dispositif d'amortissement selon la revendication 6, comprenant :
lesdits premier et deuxième éléments d'amortissement sous forme de paire d'éléments correspondants à symétrie de rotation comprenant
a) un élément en forme de coupe extérieur (11) possédant une paroi cylindrique intérieure (13) et une saillie cylindrique axiale formant un premier piston (14); et
b) un élément en forme de coupe intérieur (40) possédant une surface cylindrique extérieure (34) pour former un deuxième piston opposé à ladite paroi cylindrique intérieure (13) et une surface intérieure (37) formant une paroi cylindrique opposée à la surface dudit premier piston (14);
les dimensions desdits éléments (11, 40) étant telles que lorsqu'ils sont assemblés, lesdits éléments forment deux espaces annulaires de film de compression (27, 36) les parois cylindrique opposées respectives et pistons;
ledit roulement à billes étant disposé dans des creux (25, 26; 25') situés autour dudit premier piston (14) et maintenu entre lesdits éléments (11, 40), le diamètre desdites billes assurant ladite séparation fonctionnelle axiale entre les faces d'extrémité opposées desdits pistons et cylindres; et
un moyen pour remplir et retenir un prgoduit d'amortissement fluide dans lesdites chambres annulaires de film de compression et ledit espacement axial.

8. Dispositif d'amortissement selon la revendication 4, comprenant
lesdits premier et deuxième éléments d'amortissement sous forme de paire d'éléments correspondants à symétrie de rotation comprenant
a) un élément en forme de coupe extérieur (11; 11'; 51) possédant une paroi cylindrique intérieure (13); et
b) un piston cylindrique intérieur (40; 40'; 52) possédant une surface cylindrique extérieure (34);
les dimensions desdits éléments d'amortisseur (11, 40; 11', 40'; 51, 52) étant telles que, lorsqu'ils sont assemblés axialement, ladite paroi cylindrique intérieure (13) et ladite surface cylindrique extérieure (34) forment un espace annulaire de film de compression (27);
un ensemble de roulement à billes circulaire formé desdites billes à forte élasticité (21) maintenues entre lesdits éléments d'amortisseur (11, 40; 11', 40'; 51, 52), le diamètre desdites billes à forte élasticité assurant ladite séparation fonctionnelle entre lesdites surfaces horizontales opposées formées par une surface horizontale inférieure (28) dudit piston (40; 40'; 52) et la surface intérieure horizontale (16) dudit élément en forme de coupe (11; 11'; 51), ce qui transmet toutes les forces de charge verticales appliquées audit dispositif d'amortissement par l'intermédiaire desdites billes à forte élasticité (21);
ledit roulement à billes ayant des voies supérieure et inférieure (24, 23; 23') et lesdits creux (26, 25; 25') étant des gorges de voie annulaires plus grandes que le diamètre desdites billes (21) pour permettre un mouvement limité entre lesdits éléments d'amortisseur dans des directions radiales.

9. Dispositif d'amortissement selon la revendication 8 possédant un liquide de film de compression remplissant ledit espace annulaire (27) pour absorber des forces de vibration transversales.

10. Dispositif amortisseur selon la revendication 8 ou 9 dans lequel
ladite paroi cylindrique intérieure (13) se termine au fond dudit élément en forme de coupe (51) par un épaulement (55) qui réduit le diamètre intérieur dudit élément en forme de coupe (51) pour positionner la voie inférieure (23) faisant face à ladite surface cylindrique (43) espacée de l'épaisseur dudit espace; et
ladite surface cylindrique (43) dudit piston (52) est renforcée pour recevoir la voie supérieure (24) dudit assemblage de roulement avec un épaulement (54) qui positionne ladite voie supérieure faisant face à ladite paroi cylindrique (13) espacée de l'épaisseur dudit espace annulaire (27).
